# EUROPÄISCHE PATENTSCHRIFT

(11) **EP 0 526 509 B1**
(45) Veröffentlichungstag und Bekanntmachung des Hinweises auf die Patenterteilung: **18.01.1995**
(21) Anmeldenummer: 91908072.1
(22) Anmeldetag: 15.04.1991
(51) Int. Cl.: G11B 5/31

(54) **VERFAHREN ZUR HERSTELLUNG EINES DÜNNFILM-MAGNETBANDKOPFES**
PROCESS FOR PRODUCING A THIN-FILM MAGNETIC TAPE HEAD
PROCEDE DE PRODUCTION DE TETES DE LECTURE DE BANDES MAGNETIQUES A COUCHE MINCE

(30) Priorität: 23.04.1990 DE 4012823
(43) Veröffentlichungstag der Anmeldung: 10.02.1993
(73) Patentinhaber: Deutsche Thomson-Brandt GmbH, 78003 Villingen-Schwenningen (DE)
(72) Erfinder: UHDE, Dietmar, D-7744 Königsfeld (DE)
(86) Internationale Anmeldenummer: EP9100713
(87) Internationale Veröffentlichungsnummer: WO9116703

(56) Entgegenhaltungen:
- EP-A- 0 233 086
- DE-A- 4 020 206
- US-A- 4 399 479
- US-A- 4 601 099
- PATENT ABSTRACTS OF JAPAN vol. 11, No. 305 (p-623)(2752) 06 October 1987 & JP-A-62097118 (Hitachi Ltd.) 06 May 1987
- PATENT ABSTRACTS OF JAPAN VOL: 5 No. 196 (P-93)(868) 12 Dec. 1981 & JP-A-56 117320 (Nippon Denshin Denwa Kosha) 14 Sept. 1981
- PATENT ABSTRACTS OF JAPAN vol. 11, No, 112 (P-565)(2559) 09 April 1987 & JP-A-61 260411 (Hitachi Ltd) 18 Nov. 1986

## Beschreibung

Die Erfindung geht aus von einem Verfahren zur Herstellung eines Dünnfilmmagnetbandkopfes. Ein deartiges Verfahren ist bekannt durch die EP-A-0 233 086.

Bekannte Metal-in-Gap (z.B. Sony TSS etc.) oder lammellierte Sendust-Amorphous- Köpfe werden in Blöcken (nicht Planar) hergestellt und die Bildung des Luftspaltes erfolgt über das Zusammenfügen zweier Blockhälften. Dünnfilmblöcke, wie z.B. der IMB-Spiral-Hart-Disc-Kopf ist auf Grund der kleinen Spalthöhe nicht für Systeme mit Band-Kopf-Kontakt, wie er in Magnetbandgeräten benötigt wird, geeignet.

Eine Spaltneigung (Azimut) kann nur über eine mechanische Bearbeitung des Trägermaterials (Substrat) erzeugt werden.

Solche eine Art von Magnetbandkopf scheidet außerdem für anlaloge Systeme (lange Bandwellenlänge und sekundäre Gap-Effekte) aus. Systeme mit Azimut sind -ür Spur an Spur-Schreiben ohne Rasen (Abstandsflächen zwischen den Aufzeichnungsspuren) notwendig.

Der Erfindung liegt die Aufgabe zugrunde, einen Magnetbandkopf in Dünnfilmtechnik ohne das Zusammenfügen der beiden Blockhälften herzustellen.

Diese Aufgabe wird erfindungsgemäß durch die Merkmale des ersten Patentanspruchs gelöst. Vorteilhafte Weiterbildungen ergeben sich aus den Unteransprüchen.

Das nachfolgend beschriebene erfindungsgemäße Verfahren zur Kopfherstellung verbindet die Vorteile planarer Dünnfilmtechnik und Spaltherstellung mit den magnetischen und mechanischen Vorteilen konventionell hergestellter Köpfe. Es wird nachfolgend ein mögliches Ausführungsbeispiel an Hand von Zeichnungen näher erläutert. In den Zeichnungen stellen dar:
- Fig. 1: ein Ausschnitt aus einem Wafer nach dem ersten und zweiten Verfahrensschritt,
- Fig. 2: der Wafer-Ausschnitt nach einem dritten Verfahrensschritt,
- Fig. 3: der Wafer-Ausschnitt nach einem vierten Verfahrensschritt,
- Fig. 4: der Wafer-Ausschnitt nach einem fünften Verfahrensschritt,
- Fig. 5: der Wafer-Ausschnitt nach einem sechsten und siebten Verfahrensschritt,
- Fig. 6: der Wafer-Ausschnitt nach einem achten und neunten Verfahrensschritt und
- Fig. 7: der Wafer-Ausschnitt nach einem zehnten bis vierzehnten Verfahrensschritt.

In einem ersten Verfahrensschritt zur Herstellung eines Dünnfilmmagnetbandkopfes wird ein Substrat 1 (Wafer) mit einer Schicht 2 versehen, die resistent ist gegen ein Ätzmedium für das Substrat 1. Das Aufbringen der Schicht 2 geschieht durch Bedampfen, Sputtern oder durch ein Oxidationsverfahren.

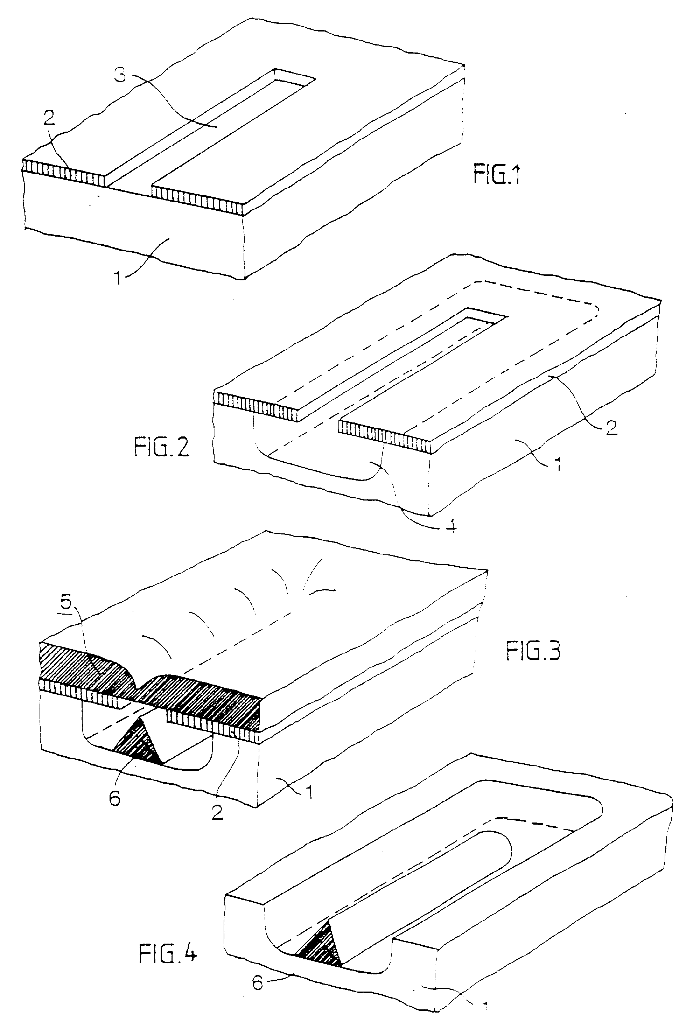

In einem zweiten Verfahrensschritt wird in die Schicht 2 mittels eines photographischen oder photolithographischen Verfahrens ein Fenster 3 geätzt (Fig. 1).

Im dritten Schritt wird in das Substrat 1 durch das Fenster 3 ein Hohlraum 4 geätzt (Fig. 2).

Anschließend wird auf das Substrat ein weichmagnetisches Material 5, z.3. Sendust, aufgebracht. Dies geschieht vorzugsweise durch Zusputtern des Fensters, wobei im Hohlraum 4 ein als nach oben gerichteter Teil ausgebildetes Prismoid 5 entsteht (Sanduhreffekt) (Fig.3).

Danach wird die Schicht 2 und das darauf aufgebrachte weichmagnetische Material 5 entfernt, beispielsweise durch Abstreifung (Stripping) (Fig. 4).

In einem sechsten Verfahrensschritt wird das Substrat 1 beiderseitig des Prismoid 6 so weit weggeätzt, bis der Prismoid sich aus der Substratoberfläche heraushebt.

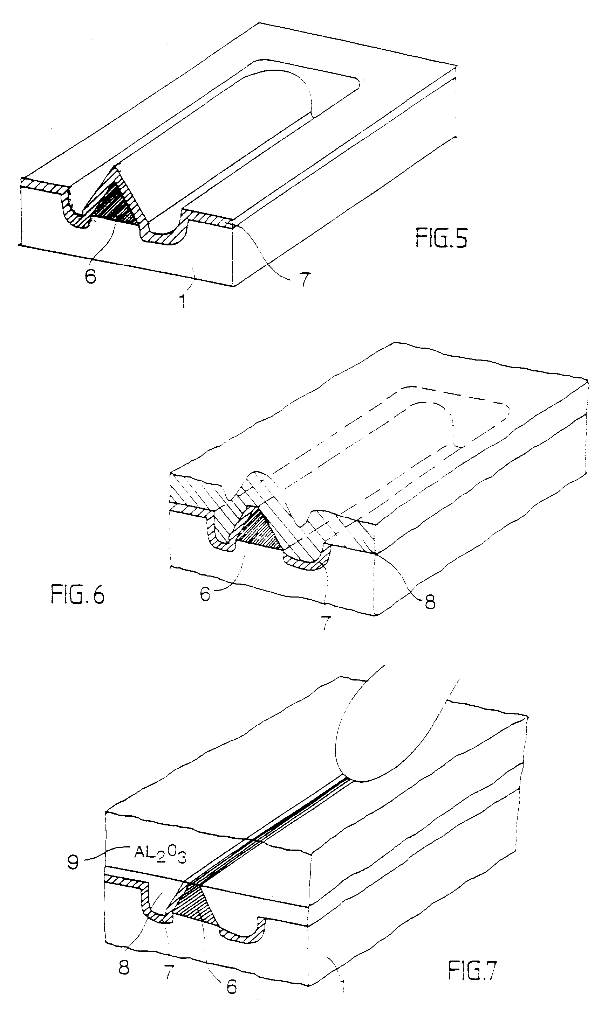

In einem siebten Verfahrensschrift wird das Substrat 1 mit einer Schicht versehen, die als Spaltschicht 7 dient. Dies geschieht mittels Sputtern oder Bedampfung. Die Spaltschicht (Gap-Spacer) bildet später den nichtmagnetischen Luftspalt (Fig. 5).

Durch eine asymetrische Ätzung, z.B. durch Neigung des Wafers oder der Ätzvorrichtung, wird die Spaltschicht einseitig dionengeätzt, d.h. abgeschuttete Stellen werden nicht geätzt. Dadurch bleibt die Spaltschicht nur au einer Seite des Prismoids erhalten.

Anschließend wird auf Substrat 1 eine weitere Schicht 8 aufgebracht, die ebenfalls aus einem weichmagnetischen Material, wie z.B. Sendust, besteht (Fig. 6).

Anschließend wird durch eine Ätzung in die Schicht 8 die verschiedenen Teile des Magnetbandkopfes, z.B. Polschuhe, Wikkelraum etc., über eine Maske ausgeformt.

Anschließend wird das Substrat 1 poliert, wobei die Prismoidenspitze (Keilspitze) entfernt wird.

Danach werden die Kopfwicklungen an den Kopfschenkeln in Dünnfilmtechnik hergestellt.

Der Rückschluß der Kopfwicklungen wird über eine weitere weichmagnetische Schicht geschlossen.

Anschließend wird das Substrat oder der Wafer mit einer weiteren dicken Schicht 9, beispielsweise einem Metalloxyd wie AL₂O₃ versehen und dadurch geschützt (Fig. 7).

Schließlich wird der Wafer aufgeteilt, geschliffen und poliert und kann der weiteren Verarbeitung zugeführt werden.

Das vorstehend beschriebene Verfahren hat insbesondere des Vorteil, daß hinsichtlich des Materials und der Spurbreite des Bandes für den Magnetbandkopf keine Begrenzungen gibt. Außerdem ist eine Lamellierung möglich, wodurch Wirbelstromverluste verhindert werden können. Außerdem wird nur ein Poliervorgang benötigt. Außerdem sind mittels des Verfahrens reine Silizium-Scanner herstellbar, weil jeweils immer zwei Magnetbandköpfe auf der Kopftrommel so angeordnet sind, daß sie sich paarweise einem bestimmten Azimut gegenüberlegen.

## Patentansprüche

1. Verfahren zur Herstellung eines Dünnfilmmagnetbandkopfes, gekennzeichnet durch folgende Schritte:
a) Ein Substrat (1) (Wafer) wird mit einer Schicht (2) versehen, die resistent ist gegen ein Ätzmedium für das Substrat (1).
b) In die Schicht (2) wird ein Fenster (3) geätzt.
c) In das Substrat (1) wird durch das Fenster (3) ein Hohlraum (4) geätzt.
d) Auf das Substrat (1) wird ein magnetisches Material (5) (z.B. Sendust) aufgebracht, wobei im Hohlraum (4) ein als nach oben gerichteter Keil ausgebildetes Prismoid (6) entsteht.
e) Die Schicht (2) und das darauf aufgebrachte magnetische Material (5) wird entfernt, beispielsweise durch Abstreifung (Stripping).
f) Das Substrat (1) wird beiderseits des Prismoids (6) so weit weggeätzt, bis der Prismoid sich aus dem Substratsoberfläche heraushebt.
g) Das Substrat (2) wird mit einer Schicht versehen, die als Spaltschicht (7) dient.
h) Durch eine asymetrische Ätzung, z.B. durch Neigung des Wafers oder der Ätzvorrichtung, wird die Spaltschicht (7) teilweise entfernt, wobei auf einer Seite des Prismoids (6) die Spaltschicht erhalten bleibt.
i) Auf dem Substrat (1) wird eine weitere Schicht (8) aufgebracht, die aus einem magnetischen Material (z.B. Sendust) besteht.
j) Durch Ätzung in der weiteren Schicht (8) werden verschiedene Teile des Magnetbandkopfes wie z.B. Polschuhe, Wickelraum usw. ausgeformt.
k) Das Substrat (1) wird poliert, wobei die Prismoidenspitze (Keilspitze) entfernt wird.
l) Es werden Kopfwicklungen in Dünnfilmtechnik hergestellt, die die Kopfschenkel des Dünnfilmmagnetbandkopfes bilden.
m) Es wird eine weitere magnetische Schicht aufgetragen, die einen Rückschluß der Kopfwicklungen herstellt.
n) Das Substrat wird mit einer weiteren Schicht (9) beispielsweise einem Metalloxyd wie AL₂O₃ versehen und dadurch geschützt.
o) Der Wafer wird aufgeteilt, geschliffen und poliert.

2. Verfahren nach Anspruch 1, **dadurch gekennzeichnet**, daß der Prisomid sich vollständig aus dem Substrat vorhebt.

3. Verfahren nach Anspruch 1, **dadurch gekennzeichnet,** daß das Fenster (3) mit einem photographischen oder photolithographischen Verfahren geätzt wird.

4. Verfahren nach Anspruch 1 oder 3, **dadurch gekenn****zeichnet**, daß das Fenster (3) rechteckig ausgebildet wird.

5. Verfahren nach Anspruch 1 oder 2, **dadurch gekennzeichnet,** daß der Prismoid (6) als Prisma ausgebildet wird.

6. Verfahren nach Anspruch 1, **dadurch gekennzeichnet,** daß die magnetischen Materialien (5,8) als weichmagnetische Materialien ausgebildet sind.

## Claims

1. Method for producing a thin-film magnetic tape head, characterized by the following steps:
a) A substrate (1) (wafer) is provided with a coating (layer) (2) which is resistant to a caustic medium for the substrate (1).
b) A window (3) is etched into the layer (2).
c) A cavity (4) is etched into the substrate (1) through the window (3).
d) A magnetic material (5) (e.g. Sendust) is deposited on to the substrate (1), whereby in the cavity (4), a prismoid (6) formed as a wedge projecting upwards is produced.
e) The layer (2) and the magnetic material (5) deposited thereon are removed, for example, by stripping.
f) The substrate (1) is etched away so far from both sides of the prismoid (6) that the prismoid projects out of the substrate surface.
g) The substrate (1) is provided with a layer which serves as a gap coating (7).
h) By using asymmetric etching, for example, by inclining the wafer or the etching device, the gap layer (7) is partly removed, whereby the gap layer remains on one side of the prismoid (6).
i) A further layer (8), consisting of a magnetic material (e.g. Sendust), is deposited on to the substrate (1).
j) Various parts of the magnetic tape head, for example, pole shoes, winding space, etc.. are shaped by etching in the further layer (8).
k) The substrate (1) is polished, whereby the prismoid apex (wedge apex) is removed.
l) Head windings are manufactured in thin-film technology which form the head legs of the thin-film magnetic tape head.
m) A further magnetic layer is deposited and this produces a return path for the head windings.
n) The substrate is provided with a further layer (9), for example, a metal oxide such as Al₂O₃ and thereby protected.
o) The wafer is divided, ground and polished.

2. Method according to claim 1, characterized in that the prismoid is completely raised out of the substrate.

3. Method according to claim 1, characterized in that the window 3 is etched using a photographic or photolithograpic technique.

4. Method according to claim 1 or 3, characterized in that the window (3) is rectangular-shaped.

5. Method according to claim 1 or 2, characterized in that the prismoid is formed as a prism.

6. Method according to claim 1, characterized in that the magnetic materials (5, 8) are formed as soft magnetic materials.

## Revendications

1. Procédé pour la fabrication d'une tête pour bande magnétique en couche mince, caractérisé par les étapes suivantes :
a) Un substrat (1) (tranche de silicium) est revêtu d'une couche (2) qui est résistante à un agent de gravure pour le substrat (1).
b) Une fenêtre (3) est gravée dans la couche (2).
c) Un espace creux (4) est gravé par la fenêtre (3) dans le substrat (1).
d) Un matériau magnétique (5) (par exemple Sendust) est appliqué sur le substrat (1), un prismatoïde (6) configuré comme un coin dirigé vers le haut étant formé dans l'espace creux (4).
e) La couche (2) et le matériau magnétique (5) qui y est appliqué sont enlevés, par exemple par stripage.
f) Le substrat (1) est enlevé par gravure des deux côtés du prismatoïde (6) jusqu'à ce que le prismatoïde se détache de la surface du substrat.
g) Le substrat (1) est pourvu d'une couche qui sert de couche d'entrefer (7).
h) La couche d'entrefer (7) est partiellement enlevée par une gravure asymétrique, par exemple par inclinaison de la tranche de silicium ou du dispositif de gravure, le couche d'entrefer restant conservée sur un côté du prismatoïde (6).
i) Une autre couche (8), qui est constituée par un matériau magnétique (par exemple Sendust) est appliquée sur le substrat (1).
j) Différentes parties de la tête pour bande magnétique, comme par exemple les surfaces pour pôle, l'espace pour les enroulements etc. sont formées par gravure dans la couche supplémentaire (8).
k) Le substrat (1) est poli, la pointe du prismatoïde (pointe du coin) étant enlevée.
l) Des enroulements pour la tête, qui forment les montants de tête de la tête pour bande magnétique, sont fabriqués en technique à couche mince.
m) Une couche magnétique supplémentaire, qui forme une fermeture des enroulements de tête, est appliquée.
n) Le substrat est revêtu d'une autre couche (9), par exemple en oxyde métallique comme AL₂O₃ et est ainsi protégé.
o) La tranche de silicium est séparée, meulée et polie.

2. Procédé selon la revendication 1, caractérisé en ce que le prismatoïde se détache entièrement du substrat.

3. Procédé selon la revendication 1, caractérisé en ce que la fenêtre (3) est gravée avec un procédé photographique ou photolithographique.

4. Procédé selon la revendication 1 ou 3, caractérisé en ce que la fenêtre (3) est de configuration rectangulaire.

5. Procédé selon la revendication 1 ou 2, caractérisé en ce que le prismatoïde (6) est configuré comme prisme.

6. Procédé selon la revendication 1, caractérisé en ce que les matériaux magnétiques (5, 8) sont configurés comme des matériaux magnétiques mous.
